# EUROPEAN PATENT SPECIFICATION

(11) **EP 0 778 726 B1**
(45) Date of publication and mention of the grant of the patent: **21.10.1998**
(21) Application number: 95930525.1
(22) Date of filing: 25.08.1995
(51) Int. Cl.: A01G 1/00, A01C 1/04

(54) **READY-MADE BED FOR PLANTING CROPS, PARTICULARLY GRASS-LIKE CROPS, AND METHOD FOR MANUFACTURING IT**
SAMENTRÄGER ZUM ZIEHEN VON PFLANZEN, INSBESONDERE GRASSAMEN, UND VERFAHREN UM DIESE TRÄGER ZU FERTIGEN
PLANCHE DE CULTURE PRETE A L'EMPLOI POUR PLANTATION D'ESPECES VEGETALES, NOTAMMENT DE GAZON, ET SON PROCEDE DE FABRICATION

(30) Priority: 02.09.1994 IT PD940153
(43) Date of publication of application: 18.06.1997
(73) Proprietor: BAGGIO GASTONE S.A.S. di BAGGIO NICOLA & C., 35100 Padova (IT)
(72) Inventor: BAGGIO, Nicola, I-35100 Padova (IT)
(74) Representative: Petruzzelli, Antonio European Patent Attorney
(86) International application number: EP9503374
(87) International publication number: WO9607309

(56) References cited:
- EP-A- 0 035 953
- WO-A-85/01418
- WO-A-92/09193
- DE-A- 1 757 655
- GB-A- 921 107

## Description

### Technical Field

The present invention relates to a ready-made bed for planting crops, particularly grass-like crops, and to the method for manufacturing it.

### Background Art

The difficulties arising in the formation or reconstitution of a grass covering, both in the case of private gardens and in the case of median strips, road junctions, landfills, and work areas (for example quarries) subjected to environmental reclamation, are known.

These difficulties can be distinguished, for the sake of clarity, into two separate categories: a first category is related to incompetence, for example of a private user who is not always able to prepare the soil so as to achieve satisfactory results; and a second category is instead related to specific obstacles that prevent the optimum yield of direct sowing in the soil.

In particular, the above mentioned obstacles substantially arise from: the morphology of the terrain (steep slopes, areas that are difficult to access with equipment, etc.), the consistency of the soil (highly slippery soils, with non-optimum water draining, etc.), and other factors, such as for example the total lack of a fertile substrate that allows sowing, especially in landfills and in reclaimed work areas.

Attempts to produce grass layers with substrates made of hemp or other natural or synthetic fibers, on which the seeds are placed, are currently known.

The methods arising from these attempts have not become widespread since they have been found to be not fully satisfactory, mainly due to economical factors but also due to yield in terms of grass layer growth.

From WO-85/01418 it is known a laminated lignocellulose fiber mat comprising a first and a second layer made of lignocellulosic material; between the first and second layers seeds of plants are distributed and the first and second layers are bondend together by heating an adhesive.

EP-A-0 035 953 discloses a ready-made bed and a method for manufacturing a ready-made bed wherein the two layers are bonded together by a fetting operation in which strand of the upper layer are forced by needles through the layers so as to confer a structural strength of the bed.

### Disclosure of the invention

A principal aim of the present invention is to provide a ready-made bed that provides a good yield in terms of grass layer growth, even in highly critical situations, at costs that are competitive if not lower than those arising from direct sowing in the soil.

In relation to this aim, an object of the present invention is to provide a ready-made bed that is very easy to lay in any soil condition and can be performed even by unspecialized personnel.

Another object of the present invention is to provide a ready-made bed that does not significantly and harmfully alter the chemical balance of the soil on which it is laid.

Another object of the present invention is to provide a ready-made bed that can be mass-produced with known technologies and can be stored even for a long time between production and laying.

Another object of the present invention is to provide a ready-made bed that is highly flexible in terms of extension that can be produced and in terms of particular requirements generated by particular situations (chemical composition of the soil, location, morphology, consistency, etc.).

With the foregoing and other objects in view, the invention provides a ready made bed for planting crops, and a method of manufacturing the same, as defined in the appended claims.

### Brief Description of the Drawings

Further characteristics and advantages of the invention will become apparent from the following detailed description of an embodiment of said crop bed and of the associated production method, which are illustrated only by way of non-limitative example in the accompanying drawings, wherein:
figure 1 is a sectional view of a ready-made bed according to the invention;
figure 2 is an exploded view of the ready-made bed according to the invention related to figure 1;
figure 3 is a view of the ready-made bed related to figure 1 during a laying step;
figure 4 is a schematic view of the method for manufacturing the improved bed related to figure 1.

### Ways of carrying out the invention

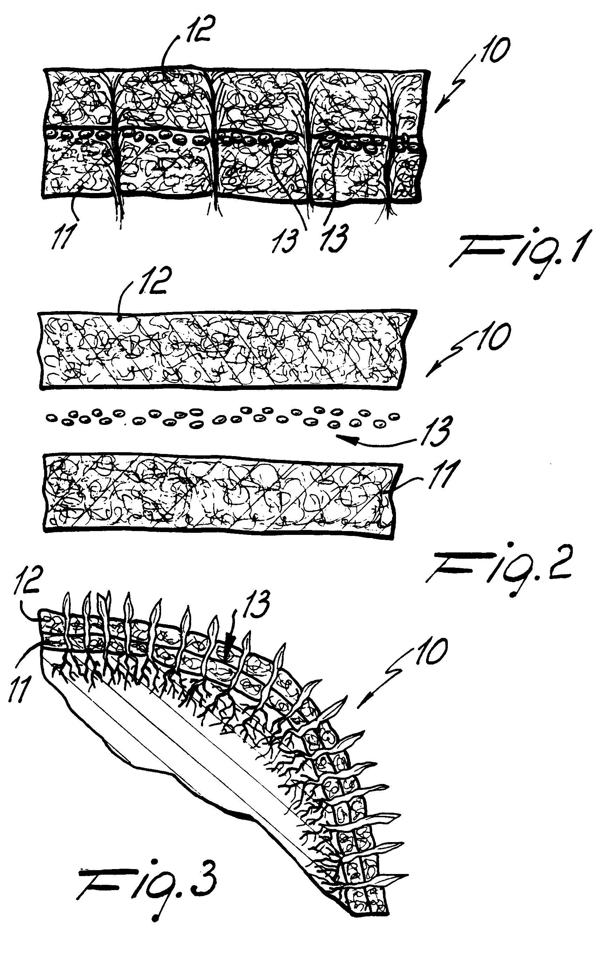

With reference to figures 1 to 4, a ready-made bed, according to the invention, is generally designated by the reference numeral 10.

The ready-made bed 10 is constituted by a first layer 11, made of non-woven fabric in the specific illustrated case, and by a second layer 12, also made of non-woven fabric.

The non-woven fabric by which the first layer 11 and the second layer 12 are constituted is produced either with natural fibers, such as viscose, cotton, cellulose, and the like, or with synthetic fibers, such as polypropylene, polyester, polyamide, polyethylene, and the like.

Seeds 13 are uniformly distributed between the first layer 11 and the second layer 12.

The first layer 11 and the second layer 12 are furthermore mutually bonded by means of groups of strands 14 that are arranged transversely to the planes of arrangement of the layers 11 and 12 by means of a felting operation, as described in greater detail hereinafter.

With particular reference to figure 3, said figure shows the ready-made bed 10 when laid in place.

In particular, it should be noted that the non-woven fabric on one hand allows the normal growth of the plant and on the other hand allows easy grip of its roots in the underlying soil.

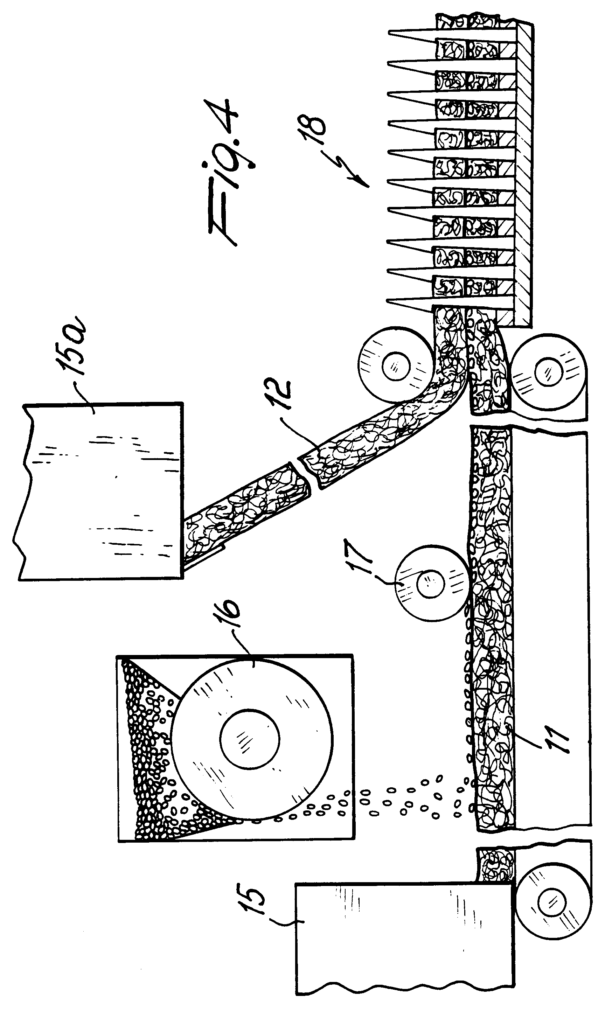

With reference in particular to figure 4, a possible method far obtaining the ready-made bed 10 is described hereinafter.

More specifically, the method described herein comprises the following steps: feeding the first layer 11 and the second layer 12 in output from the corresponding carding machines 15 and 15a, in the case of non-woven fabric; distribution of the seeds 13 on the first layer 11 by means of an embossed cylinder 16; preparation, during which the seeds 13 are pushed inside the first layer 11 by means of a presser roller 17; bonding, during which the first layer 11 and the second layer 12 are placed in contact and bonded by means of a felting process by a felting machine 18.

As an alternative to the felting process, it is possible to use an adhesive to connect the two layers and to fix the seeds; said adhesive must not contain water or, if it does contain it, said water must evaporate completely prior to seed distribution.

Ultrasonic heat-bonding can be performed as a further alternative.

There is also a step, not shown in the figures, in which the strip of ready-made bed 10 is rolled onto cardboard tubes and cut to size.

It should be noted that in these conditions the bed 10 can be stored even for very long periods, and that once it is laid in place, the ready-made bed 10 requires only hydration which, due to the great absorbing ability of the non-woven fabric, produces a humid layer that allows the germination and growth of the grass layer.

In practice it has been observed that the intended aim and objects have been achieved; in particular, the great production flexibility and the very easy storage, transport and laying of the ready-made bed should be noted.

Furthermore, the ready-made bed, especially if produced using natural materials, causes no problems regarding the biochemical imbalance of the soil.

It should also be noted that the ready-made bed can be laid in place on surfaces of any shape, steeply inclined ones (even vertical ones, with simple anchoring means such as for example nails), and, in extreme cases, on surfaces having no soil substrate (bare rock) without using special machines or equipment.

The present invention is susceptible to numerous modifications and variations; for example, the first layer can be constituted by paper-like material instead of non-woven fabric, and this also produces a change in the production method.

Sowing, which can have a uniform or irregular distribution, can be performed with conventional sowing devices, and the preparation step can also be performed by means of a vibrator or by aspirating air on the side that lies opposite to the seed laying side.

Again as regards seed distribution, it is possible to mix said seeds with fertilizing substances and/or with substances adapted to assist growth.

The materials employed, so long as they are compatible with the contingent use, as well as the dimensions, may be any according to the requirements; all the details may also be replaced with other technically equivalent ones.

## Claims

1. A ready-made bed for planting crops, particularly grass-like ones, wherein said bed (10) comprises seeds (13) of the planting crop, a first (11) and a second (12) layer for supporting the seeds of the crop,
said layers (11, 12) being in direct contact with one another,
at least the first layer of said layers being made by a non-woven fabric,
said layers being bonded together,
characterized in that all the seeds (13) are interpenetrated into said first layer(11).

2. A ready-made bed according to claim 1, characterized in that both the two layers are made in non-woven fabric.

3. A ready-made bed according to claim any of previous claims, characterized in that said seeds (13) of the crops are uniformly distributed into the first layer.

4. A ready-made bed according to claim any of previous claims, characterized in that said seeds (13) into said first layer(11) are arranged substantially at the same height.

5. A ready-made bed according to any of previous claims, characterized in that said layer being made in natural fibers.

6. A ready-made bed according to claim 5, characterized in that said natural fibers is viscose and/or cotton.

7. A ready-made bed according to any of previous claims 1 to 4, characterized in that said non-woven fabric is constituted by synthetic fibers.

8. A ready-made bed according to claim 7, characterized in that said synthetic fibers is chosen in the group comprising polypropylene, polyester, polyamide, polyethylene.

9. A ready-made bed according to any of previous claims, characterized in that said first and second layer are bonded by a felting operation in which layers are bonded together by means of groups of strands forced to arrange themselves transversely to the planes of arrangement of said layers (11, 12) so as to confer a structural strength to said bed (10).

10. A ready-made bed according to any of previous claims 1 to 8, characterized in that said first and second layer are bonded by an adhesive.

11. A ready-made bed according to any of previous claims 1 to 8, characterized in that said first and second layer are bonded by ultrasonic thermal bonding.

12. Ready-made bed according to any of the previous claims, characterized in that said seeds are mixed with fertilizing substances and/or substances adapted to assist their growth; and in that said seeds are distributed in an irregular fashion.

13. A method for manufacturing a ready-made bed for planting crops, comprising the steps of:
- arranging a first layer (11) of non-woven fabric on a desired area;
- distributing seeds (13) of crops over said first layer (11);
- superimposing a second layer (12) in direct contact over said first layer (11);
- and bonding together, said first and second layers (11, 12),
characterized in that
before superimposing the second layer (12) made of non-woven fabric is provided an interpenetration of said the seeds (13) into the first layer (11) made of non-woven fabric.

14. A method according to claim 13, characterized in that the seeds (13) are interpenetrated into the first layer (11) arranging substantially at the same height.

15. A method according to claim 14, characterized in that said interpenetration of said the seeds (13) into the first layer (11) made of non-woven fabric before superimposing the second layer (12) is carried out by means of at least a presser roller (17).

16. A method according to any of previous claims 13 to 15, characterized in that of comprising the step of aspirating air on the side of the first layer (11) opposite to the one where said seeds (13) are placed.

17. A method according to any of previous claims 13 to 16, characterized in that the step of distributing seeds (13) of crops over said first layer (11) is carried out by means of at least a vibrator.

18. A method according to any of previous claims 13 to 17, characterized in that said bonding step is performed by a felting operation carried out by a felting machines (18).

19. A method according to any of previous claims 13 to 18, characterized in that said bonding step is performed with an adhesive to connect said first and second layers.

20. A method according to any of previous claims 13 to 19, characterized in that said adhesive to connect said first and second layers does not contain water.

21. A method according to any of previous claims 13 to 20, characterized in that said bonding step is performed by ultrasonic thermal bonding.

22. Method according to any of previous claims 13 to 21, characterized in that during a step for feeding the layers of non-woven fabric said layers are produced by means of a carding and/or extrusion machine.

## Patentansprüche

1. Ein gebrauchsfertiger Samenträger zum Ziehen von Pflanzen, besonders von grasähnlichen, wobei der besagte Samenträger (10) Samen (13) für die zu ziehenden Pflanzen und eine erste (11) und eine zweite (12) Schicht zum Tragen der Pflanzensamen umfaßt,
und diese Schichten (11, 12) sich in direktem Kontakt miteinanderbefinden. wobei zumindest die erste Schicht der besagten Schichten aus nicht gewebtem Gewebe besteht,
und die besagten Schichten miteinanderverbunden sind,
dadurch gekennzeichnet, daß alle Samen (13) diese erste Schicht (11) vollständig durchdringen.

2. Ein gebrauchsfertiger Samenträger gemäß Anspruch 1, dadurch gekennzeichnet, daß die beiden Schichten aus nicht gewebtem Gewebe bestehen.

3. Ein gebrauchsfertiger Samenträger gemäß einem beliebigen der vorausgegangenen Ansprüche, dadurch gekennzeichnet, daß die besagten Samen (13) der Pflanzen gleichmäßig über die gesamte Schicht verteilt sind.

4. Ein gebrauchsfertiger Samenträger gemäß einem beliebigen der vorausgegangenen Ansprüche, dadurch gekennzeichnet, daß die besagten Samen (13) in dieser besagten ersten Schicht im wesentlichen auf derselben Höhe angeordnet sind.

5. Ein gebrauchsfertiger Samenträger gemäß einem beliebigen der vorausgegangenen Ansprüche, dadurch gekennzeichnet, daß die besagte Schicht aus Naturfasern besteht.

6. Ein gebrauchsfertiger Samenträger gemäß Anspruch 5, dadurch gekennzeichnet, daß die besagte Naturfaser Viskose und/oder Baumwolle ist.

7. Ein gebrauchsfertiger Samenträger gemäß einem beliebigen der vorausgegangenen Ansprüche von 1 bis 4, dadurch gekennzeichnet, daß das besagte nicht gewebte Gewebe aus synthetischen Fasern besteht.

8. Ein gebrauchsfertiger Samenträger gemäß Anspruch 7, dadurch gekennzeichnet, daß die besagten Synthetikfasern innerhalb der Gruppe ausgesucht wurden, die Polypropylen, Polyester, Polyamid, Polyäthylen umfaßt.

9. Ein gebrauchsfertiger Samenträger gemäß einem beliebigen der vorausgegangenen Ansprüche, dadurch gekennzeichnet, daß die besagte erste und Zweite Schicht durch einen Verfilzungsvorgang verbunden sind, bei dem die Schichten durch Gruppen von Fasern miteinander verbunden werden, die zwangsläufig quer zu den Anordnungsebenen der besagten Schichten (11, 12) verlaufen, so daß sie dem besagten Samenträger(10) strukturelle Stärke verleihen.

10. Ein gebrauchsfertiger Samenträger gemäß einem beliebigen der vorausgegangenen Ansprüche von 1 bis 8, dadurch gekennzeichnet, daß die besagten Schichten eins und zwei miteinander durch einen Klebstoff verbunden sind.

11. Ein gebrauchsfertiger Samenträger gemäß einem beliebigen der vorausgegangenen Ansprüche von 1 bis 8, dadurch gekennzeichnet, daß die besagten Schichten eins und zwei miteinander durch eine Ultraschall-Wärmebindung verbunden sind.

12. Ein gebrauchsfertiger Samenträger gemäß einem beliebigen der vorausgegangenen Ansprüche, dadurch gekennzeichnet, daß die besagten Samen mit Düngemitteln und/oder wachstumsfördernden Substanzen gemischt sind; sowie dadurch, daß die besagten Samen unregelmäßig verteilt sind.

13. Eine Methode für die Herstellung eines gebrauchsfertigen Samenträgers zum Ziehen von Pflanzen, die folgende Schritte umfaßt:
- Anordnung einer ersten Schicht (11) eines nicht gewebten Gewebes aufeinem gewünschten Bereich;
- Verteilung von Pflanzensamen (13) über die besagte erste Schicht (11);
- Darüberlegen einer zweiten Schicht (12) in direktem Kontakt mit der besagten ersten Schicht (11);
- und die Verbindung der besagten Schichten eins und zwei (11, 12) miteinander,
dadurch gekennzeichnet, daß
bevor die zweite Schicht (12) aus nicht gewebtem Gewebe aufgelegt wird, eine Durchdringung der besagten Samen (13) in die erste Schicht (11) aus nicht gewebtem Gewebe vorgesehen wird.

14. Eine Methode gemäß Anspruch 13, dadurch gekennzeichnet, daß die Samen (13) in die erste Schicht (11) eindringen und sich im wesentlichen aufderselben Höhe anordnen.

15. Eine Methode gemäß Anspruch 14, dadurch gekennzeichnet daß die besagte Durchdringung der besagten Samen (13) in die erste Schicht (11) aus nicht gewebtem Gewebe vor der Auflage der zweiten Schicht (12) zumindest mit Hilfe einer Preßrolle (17) erzielt wird.

16. Eine Methode gemäß einem beliebigen der vorausgegangenen Ansprüche 13 bis 15, dadurch gekennzeichnet, daß sie den Schritt der Luftansaugung an der Seite der ersten Schicht (11) gegenüber derjenigen, an der sich die besagten Samen (13) befinden, umfaßt.

17. Eine Methode gemäß einem beliebigen der vorausgegangenen Ansprüche von 13 bis 16, dadurch gekennzeichnet, daß der Schritt der Verteilung der Pflanzensamen (13) über die besagte erste Schichte (11) zumindest mit Hilfe eines Vibrators durchgeführt wird.

18. Eine Methode gemäß einem beliebigen der vorausgegangenen Ansprüche von 13 bis 17, dadurch gekennzeichnet, daß der besagte Verbindungsschritt durch einen Verfilzungsvorgang erfolgt, der durch eine Filzmaschine (18) durchgeführt wird.

19. Eine Methode gemäß einem beliebigen der vorausgegangenen Ansprüche von 13 bis 18, dadurch gekennzeichnet, daß der besagte Verbindungsschritt mit einem Klebstoff durchgeführt wird, mit dem die besagte erste und zweite Schicht verbunden werden.

20. Eine Methode gemäß einem beliebigen der vorausgegangenen Ansprüche von 13 bis 19, dadurch gekennzeichnet, daß der besagte Klebstoff, mit dem die erste und zweite Schicht verbunden werden, kein Wasser enthält.

21. Eine Methode gemäß einem beliebigen der vorausgegangenen Ansprüche von 13 bis 20, dadurch gekennzeichnet, daß der besagte Verbindungsschritt mit Hilfe von Ultraschall-Wärmebindung erfolgt.

22. Eine Methode gemäß einem beliebigen der vorausgegangenen Ansprüche von 13 bis 21, dadurch gekennzeichnet, daß die besagten Schichten während eines Schritts für die Nährung der Schichten aus nicht gewebtem Gewebe mit Hilfe einer Krempelmaschine und/oder Strangpresse hergestellt werden.

## Revendications

1. Une planche de culture prête à l'emploi pour la plantation d'espèces végétales, notamment de gazon, dans laquelle cette dite planche de culture (10) comprend les graines (13) de l'espèce végétale à planter, une première couche (11) et une seconde couche (12) pour supporter les graines de l'espèce végétale,
ces couches (11, 12) étant directement en contact l'une de l'autre,
au moins la première couche de ces dites couches étant réalisée en tissu non tissé,
ces couches étant fixées ensemble
caractérisée par le fait que toutes les graines (13) sont faites pénétrer dans cette première couche (11).

2. Une planche de culture prête à l'emploi conformément à la revendication 1, caractérisée par le fait que les deux couches sont réalisées en tissu non tissé.

3. Une planche de culture prête à l'emploi conformément à n'importe laquelle des revendications précédentes, caractérisée par le fait que les dites graines (13) des espèces végétales sont uniformément distribuées à l'intérieur de la première couche.

4. Une planche de culture prête à l'emploi conformément à n'importe laquelle des revendications précédentes, caractérisée par le fait que les dites graines (13) à l'intérieur de la dite première couche (11) sont essentiellement disposées à la même hauteur.

5. Une planche de culture prête à l'emploi conformément à n'importe laquelle des revendications précédentes, caractérisée par le fait que la dite couche est réalisée en fibres naturelles.

6. Une planche de culture prête à l'emploi conformément à la revendication 5, caractérisée par le fait que ces dites fibres naturelles sont en viscose et/ou en coton.

7. Une planche de culture prête à l'emploi conformément à n'importe laquelle
des revendications de 1 à 4 précédentes, caractérisée par le fait que ce tissu non tissé est constitué de fibres synthétiques.

8. Une planche de culture prête à l'emploi conformément à la revendication 7, caractérisée par le fait que ces dites fibres synthétiques sont choisies dans le groupe comprenant le polypropylène, le polyester, le polyamide et le polyéthylène.

9. Une planche de culture prête à l'emploi conformément à n'importe laquelle des revendications précédentes, caractérisée par le fait que les dites première et seconde couches sont attachées au moyen d'une opération de feutrage dans laquelle les couches sont fixées ensemble au moyen de groupes de filaments forcés à se disposer transversalement aux plans de disposition de ces dites couches (11, 12) de manière à conférer une robustesse structurale à cette planche de culture (10).

10. Une planche de culture prête à l'emploi conformément à n'importe laquelle des revendications de 1 à 8 précédentes, caractérisée par le fait que la première et la seconde couches sont attachées au moyen d'un adhésif.

11. Une planche de culture prête à l'emploi conformément à n'importe laquelle des revendications de 1 à 8 précédentes, caractérisée par le fait que les dites première et seconde couches sont attachées parfixation thermique aux ultrasons.

12. Une planche de culture prête à l'emploi conformément à n'importe laquelle des revendications précédentes, caractérisée par le fait que les graines sont mélangées à des substances fertilisantes et/ou à des substances adaptées à favoriser leur croissance; et par le fait que ces dites graines sont distribuées d'une manière irrégulière.

13. Une méthode de fabrication d'une planche de culture prête à l'emploi pour plantation d'espèces végétales, comprenant les étapes de:
- disposition d'une première couche (11) de tissu non tissé sur une aire désirée;
- distribution des graines (13) de l'espèce végétale sur la dite première couche (11);
- superposition d'une seconde couche (12) au contact direct de la dite première couche (11),
- et fixation ensemble, de ces dites première et seconde couches (11, 12),
caractérisé par le fait que
avant de superposer la seconde couche (12) fabriquée en tissu non tissé ces dites graines (13) sont faites pénétrer dans la première couche (11) réalisée en tissu non tissé.

14. Une méthode conformément à la revendication 13, caractérisée par le fait que les graines (13) faites pénétrer dans la première couche (11) sont essentiellement disposées à la même hauteur.

15. Une méthode conformément à la revendication 14, caractérisée par le fait que ladite pénétration des dites graines (13) dans la première couche (11) fabriquée en tissu non tissé avant de superposer la seconde couche (12) est effectuée au moyen d'au moins un rouleau presseur (17).

16. Une méthode conformément à n'importe laquelle des revendications de 13 à 15 précédentes, caractérisée par le fait qu'elle comprend l'étape d'aspiration de l'air sur le côté de la première couche (11) opposée à celle où lesdites graines (13) sont disposées.

17. Une méthode conformément à n'importe laquelle des revendications de 13 à 16 précédentes, caractérisée par le fait que l'étape de distribution des graines (13) de l'espèce végétale sur la dite première couche (11) est réalisée au moyen d'au moins un vibrateur.

18. Une méthode conformément à n'importe laquelle des revendications de 13 à 17 précédentes, caractérisée par le fait que ladite étape de fixation est réalisée par une opération de feutrage effectuée par une machine de feutrage (18).

19. Une méthode conformément à n'importe laquelle des revendications de 13 à 18 précédentes, caractérisée par le fait que ladite étape de fixation est réalisée avec un adhésif pour attacher les dites première et seconde couches.

20. Une méthode conformément à n'importe laquelle des revendications de 13 à 19 précédentes, caractérisée par le fait que le dit adhésif pour attacher les dites première et seconde couches ne contient pas d'eau.

21. Une méthode conformément à n'importe laquelle des revendications de 13 à 20 précédentes, caractérisée par le fait que la dite étape de fixation est réalisée au moyen d'une fixation thermique aux ultrasons.

22. Une méthode conformément à n'importe laquelle des revendications de 13 à 21 précédentes, caractérisée par le fait que durant une étape pour l'alimentation des couches de tissu non tissé ces dites couches sont produites au moyen d'une cardeuse et/ou d'une extrudeuse.
